# EUROPEAN PATENT APPLICATION

(11) **EP 4 704 314 A1**
(43) Date of publication of application: **04.03.2026**
(21) Application number: 25195718.9
(22) Date of filing: 13.08.2025
(51) Int. Cl.: H02K 15/12, H02K 5/02, H02K 5/10, H02K 5/08, H02K 5/22

(54) **HOLLOW SHAFT MOTOR**

(30) Priority: 27.08.2024 CN 202411186017
(71) Applicant: Choi, Kwangho, Seoul 06506 (KR)
(72) Inventor: Choi, Kwangho, 06506 Seoul (KR); Kim, Beomlae, 17521 Anseong-si, Gyeonggi-do (KR)
(74) Representative: Gulde & Partner

(57) **Abstract**

A hollow shaft motor according to the present invention comprises: a stator assembly 10; and a motor housing 20 formed around the stator assembly 10 by resin molding, wherein a hollow shaft rotor is placed inside the stator assembly 10, and the hollow shaft rotor is rotatably coupled to the motor housing.

## Description

### Technical field

The present invention relates to a hollow shaft motor. More specifically, the present invention relates to a hollow shaft motor having a structure suitable for integrally manufacturing a motor housing by insert injection molding when manufacturing a hollow shaft motor.

### Background art

In general, the force acting on a brake in a brake system is derived from a pressure generated in a master cylinder. In order to generate pressure in the master cylinder of the brake system, the use of an electric motor has been a widely used technology. The electric motor is commonly referred to as a hollow shaft motor because the motor rotates a hollow shaft with a hollow interior, and includes a ball screw which is coupled to the hollow shaft and rotates together inside the hollow shaft, and a ball nut which vertically moves by the rotation of the ball screw.

As disclosed in Korean Patent No. 10-2123180, a conventional hollow shaft motor has a structure in which a stator assembly in which a stator core wound with coils and a bus bar housing are coupled is coupled to a motor housing made of a metal presswork, a hollow shaft rotor is placed inside the stator assembly, and a separate upper cover is coupled to the bus bar housing.

According to the structure of this hollow shaft motor, since assembly tolerances may occur when the stator assembly is coupled to the motor housing, concentricity may not be ensured when the hollow shaft rotates. Especially, in order to press-fit a bearing into the hollow shaft housing, a bearing insertion space needs to be formed by a post-process, which increases the number of processing steps by the post-process. Due to the assembly tolerances or post-process, the noise and vibration may occur during motor operation. Additionally, the moisture or foreign substances may penetrate into the stator assembly, thereby negatively affecting the durability or reliability of the motor. Accordingly, the normal operation of the brake system may not be ensured.

Therefore, the present invention suggests a hollow shaft motor capable of simplifying the manufacturing process and solving the above-mentioned problems at the same time by manufacturing a motor housing including a stator assembly therein by insert injection molding.

### Summary of invention

### Task to be solved

It is an object of the present invention to provide a hollow shaft motor capable of simplifying the manufacturing process.

It is another object of the present invention to provide a hollow shaft motor capable of eliminating assembly tolerances of a hollow shaft motor and ensuring concentricity.

It is yet another object of the present invention to provide a hollow shaft motor capable of preventing the generation of noise and vibration during operation of the hollow shaft motor.

It is yet another object of the present invention to provide a hollow shaft motor capable of preventing moisture from penetrating into the stator assembly of the hollow shaft motor.

The above and other inherent objects of the present invention may all be easily achieved by the description of the present invention described below.

### Means for solving task

The present invention provides a hollow shaft motor comprises a stator assembly 10, and a motor housing 20 formed around the stator assembly 10 by resin molding, wherein a hollow shaft rotor is placed inside the stator assembly 10, and the hollow shaft rotor is rotatably coupled to the motor housing.

In the present invention, the stator assembly 10 may comprise a stator 11 and a busbar unit 12 coupled to an upper part of the stator.

In the present invention, the motor housing 20 may comprise a housing body 21 having a structure with a hollow inner space so that the hollow shaft rotor is placed in the inner space; and a flange 22 formed on an upper part of the housing body 21 extending outward.

In the present invention, a busbar cover 23 in which the busbar unit 12 may be molded with a resin is formed on an inner side of the flange 22

In the present invention, a lower protrusion 24 having a ring shape and extending downward may be formed on a lower part of the housing body 21.

In the present invention, the busbar unit 12 may comprise a plurality of busbars 120 and a pre-mold 121 to which the busbars 120 are fixed.

In the present invention, a terminal cover 13 protruding upward may be formed on one side of the motor housing 20.

The present invention also provides a hollow shaft motor comprising a stator assembly 10; and a motor housing 20 formed around the stator assembly 10 by resin molding, wherein a busbar cover 23 formed on an upper inner side of the motor housing 20 is integrally formed.

### Effect of invention

The present invention has an effect of providing a hollow shaft motor capable of simplifying the manufacturing process by forming a motor housing through injection molding while placing a stator assembly in an insert injection mold, eliminating assembly tolerances of the hollow shaft motor to ensure concentricity, minimizing noise and vibration generated during operation of the motor, and effectively preventing moisture from penetrating into the interior of the hollow shaft motor.

### Brief of description of drawings

Fig. 1 is a top perspective view illustrating a hollow shaft motor according to the present invention;
Fig. 2 is a bottom perspective view illustrating a hollow shaft motor according to the present invention;
Fig. 3 is an exploded perspective view illustrating the stator assembly and the motor housing of a hollow shaft motor according to the present invention;
Fig. 4 is a cut-away perspective view illustrating a portion of a hollow shaft motor according to the present invention;
Fig. 5 is a top perspective view illustrating the stator assembly of a hollow shaft motor according to the present invention;
Fig. 6 is a bottom perspective view illustrating the stator assembly of a hollow shaft motor according to the present invention;
Fig. 7 is an exploded top perspective view illustrating the stator of a hollow shaft motor according to the present invention;
Fig. 8 is an exploded bottom perspective view illustrating the stator of a hollow shaft motor according to the present invention;
Fig. 9 is an exploded perspective view illustrating the stator and the busbar unit of the stator assembly in a hollow shaft motor according to the present invention;
Fig. 10 is a bottom perspective view illustrating the busbar unit of a hollow shaft motor according to the present invention;
Fig. 11 is an exploded top perspective view illustrating the busbar and the pre-mold of the busbar unit in a hollow shaft motor according to the present invention; and
Fig. 12 is an exploded bottom perspective view illustrating the busbar and the pre-mold of the busbar unit in a hollow shaft motor according to the present invention.

Hereinafter, the present invention will be described in detail with reference to the accompanying drawings.

### Best mode for carrying out the invention

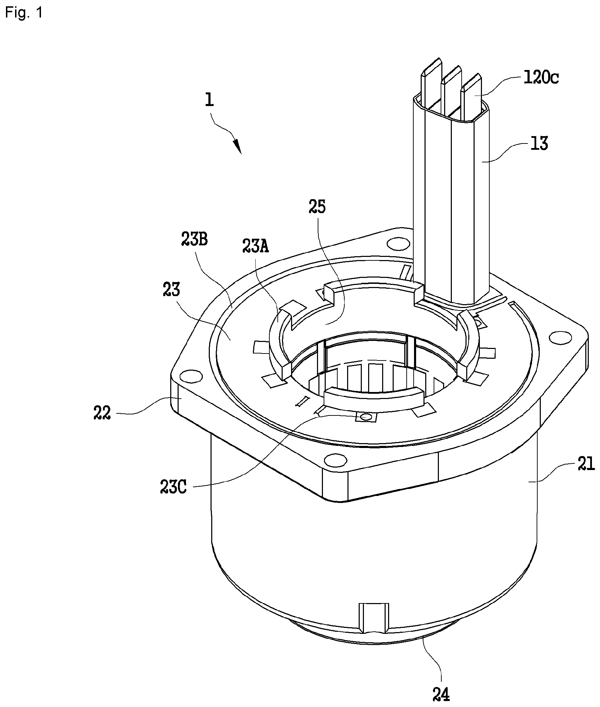

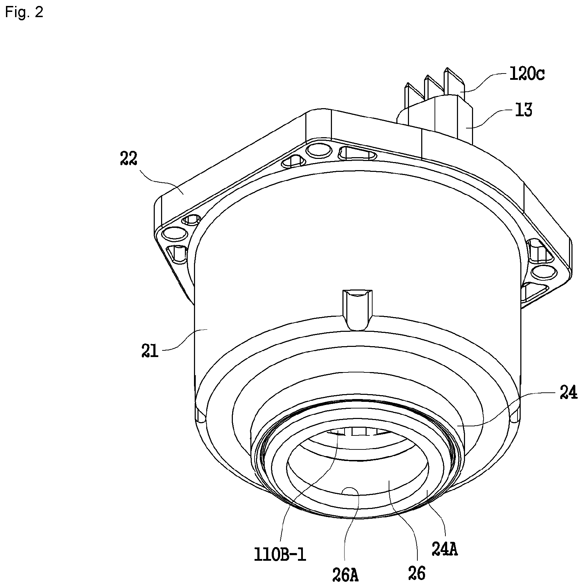

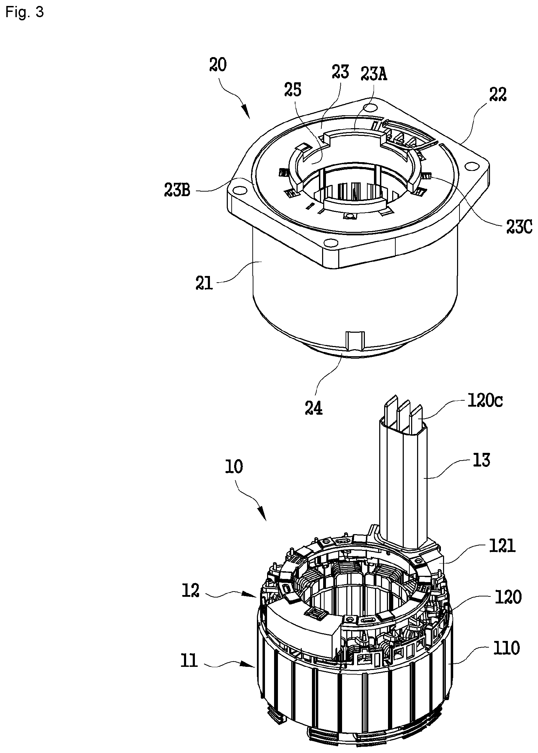

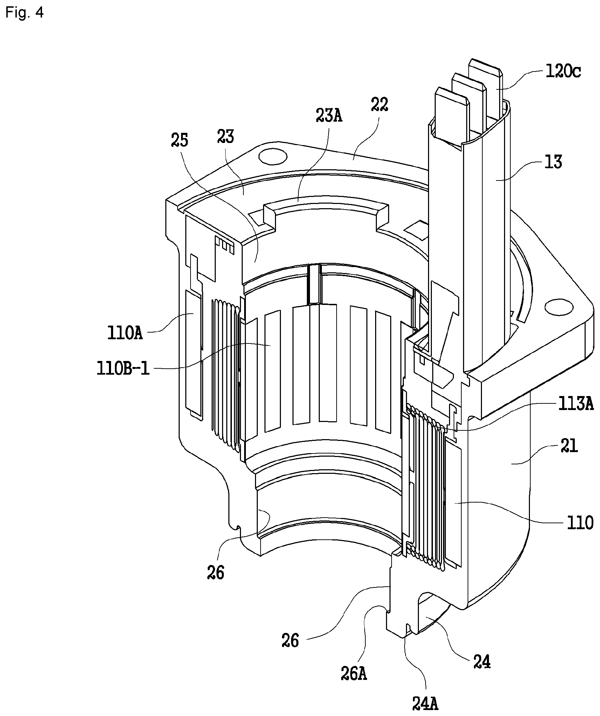

Fig. 1 is a top perspective view illustrating a hollow shaft motor 1 according to the present invention. Fig. 2 is a bottom perspective view thereof. Fig. 3 is an exploded perspective view illustrating the stator assembly 10 and the motor housing 20 of a hollow shaft motor 1 according to the present invention. Fig. 4 is a cut-away perspective view illustrating a portion of a hollow shaft motor 1 according to the present invention.

As illustrated in Figs. 1 to 4, the hollow shaft motor 1 according to the present invention comprises a stator assembly 10 and a motor housing 20 formed around the stator assembly 10 by resin molding.

The stator assembly 10 comprises a stator 11 and a busbar unit 12 coupled to an upper part of the stator 11. The motor housing 20 is integrally formed around the stator assembly 10 by injection molding, in which the stator assembly 10 is placed in an insert injection mold and then a plastic resin melt is injected, i.e., by insert injection molding. A hollow shaft rotor (not shown) is placed in an inner space of the stator assembly 10, and the hollow shaft rotor is rotatably coupled to the motor housing 20.

The stator 11 comprises a stator core 110, an upper insulator 111 coupled to an upper part of the stator core 110, a lower insulator 112 coupled to a lower part of the stator core 110, and a coil 113 wound around teeth of the stator 11.

The stator core 110 is manufactured by stacking a plurality of thin core sheets prepared from electrical steel sheets. The stator core 110 comprises a core base 110A in the shape of a circle and a plurality of teeth 110B protruding inward from the core base 110A of the stator core 110 in a hollow shaft direction. The space formed between two adjacent teeth 110B defines a slot 110C.

A plurality of outer core grooves 110A-1 are formed vertically at regular intervals on an outer surface of the core base 110A. When the motor housing 20 is insert injection molded to the stator assembly 10, a resin melt is injected into the outer core grooves 110A-1, thereby increasing a coupling force between the motor housing 20 and the stator core 110.

The axial end of the tooth 110B is a tooth end part 110B-1 protruding to both sides in a circumferential direction. A tooth end inner groove 110B-1' formed vertically is provided in a central part of the tooth end part 110B-1. A resin is also injected into the tooth end inner groove 110B-1' to form a portion of the motor housing 20. As used herein, the term "axial direction," "axially" refers to the direction toward the center of the circular shape when viewed in the plane of the core base 110A. A coil winding 113A wound around the tooth 110B is placed in the slot 110C.

The upper insulator 111 coupled to an upper part of the stator core 110 comprises an upper base insulating part 111A in the shape of a ring coupled to an upper part of the core base 110A, an upper tooth insulating part 111B coupled to an upper part of the tooth 110B, and an upper slot insulating part 111C for insulating an upper inner surface of the slot 110C.

The lower insulator 112 coupled to a lower part of the stator core 110 comprises a lower base insulating part 112A in the shape of a ring coupled to a lower part of the core base 110A, a lower tooth insulating part 112B coupled to a lower part of the tooth 110B, and a lower slot insulating part 112C for insulating a lower inner surface of the slot 110C. The lower slot insulating part 112C is assembled in contact with the upper slot insulating part 111C to insulate an inner surface of the slot 110C.

The busbar unit 12 is coupled to an upper part of the stator 11, specifically to the upper insulator 111 of the stator 11. The detailed coupling structure between the busbar unit 12 and the upper insulator 111 will be described later below.

The busbar unit 12 comprises a plurality of busbars 120 and a pre-mold 121 coupled to the busbars 120. The number of busbars 120 is not particularly limited, but in the case of a three-phase BLDC motor, it is preferable to use three busbars for connecting the U, V and W phases. The accompanying drawings illustrate a case in which three busbars 120 are used. Each busbar 120 comprises a busbar body 120A in the shape of a circle, a plurality of coil connection parts 120B formed in the busbar body 120A in an outer radial direction, and a terminal 120C extending upward from an end of the busbar body 120A.

A terminal cover 13 surrounds a plurality of terminals 120C and serves to protect the terminals 120C. The terminal cover 13 is coupled to the pre-mold 121, and protrudes above the busbar cover 23 to be coupled to the busbar unit 12. Preferably, the terminal cover 13 may be formed by insert injection molding while the stator 11 and the busbar unit 12 are assembled. Here, a resin is introduced through a through hole 120C' formed in the terminal 120C, resulting in a firm coupling between the terminal 120C and the resin molding. More preferably, the terminal cover 13 may be formed when the motor housing 20 is formed by insert injection molding. In another embodiment, the terminal cover 13 may be coupled to one side of the motor housing 20 as a separate member after the motor housing 20 is molded by insert injection molding. In yet another embodiment, instead of applying the terminal cover 13, a terminal guide 121D of the pre-mold 121 may be formed to cover the entire terminal 120C except for a portion of the upper part, thereby protecting the terminal 120C.

The motor housing 20 comprises a housing body 21, a flange 22, a busbar cover 23, a lower protrusion 24, an upper bearing press-fit part 25, and a lower bearing press-fit part 26. Since the motor housing 20 is formed by injection molding of a resin, all parts of the motor housing 20 are integrally formed as a single member.

The housing body 21 has a structure with a hollow empty inner space so that a hollow shaft rotor is placed in the inner space, and the stator assembly 10 is embedded inside the housing body 21. The flange 22 is formed on an upper part of the housing body 21 extending outward. The busbar cover 23 in which the busbar unit 12 is molded with a resin is formed on an inner side of the flange 22. The lower protrusion 24 having a ring shape and extending downward is formed on a lower part of the housing body 21.

The upper bearing press-fit part 25 for press-fitting an upper bearing (not shown) is formed on an inner surface of the busbar cover 23, and a lower bearing press-fit part 26 for press-fitting a lower bearing (not shown) is formed on an inner surface of the lower protrusion 24. A lower stepped part 26A may be formed along an outer circumference of the lower bearing press-fit part 26 to prevent the lower bearing from dislodging. A lower cover coupling part 24A for coupling a lower cover (not shown) is formed on a lower part of the lower protrusion 24.

A plurality of central coupling teeth 23A protruding upward are formed along an upper circumference of the inner space of the busbar cover 23. The central coupling tooth 23A provides a structure for coupling a piston mechanism of a master cylinder (not shown) to the hollow shaft motor 1. A boundary groove 23B is formed along a circumference on an upper part of the busbar cover 23. The boundary groove 23B is a groove for accommodating a sealing member (not shown), such as rubber or silicone, when the hollow shaft motor 1 is coupled to the master cylinder.

A plurality of inspection holes 23C may be formed on an upper part of the busbar cover 23. The inspection hole 23C allows check of whether the resin molding has been properly formed around the busbar 120. In some cases, the inspection hole 23C may communicate with an internal viewing hole 121A-4 formed in the annular ring part 121A of the pre-mold 121, allowing check through these holes 23C and 121A-4 of whether the resin molding has been properly formed around the coil winding 113A. In commercially available hollow shaft motors, these holes 23C and 121A-4 may not be formed.

In prior art, since a busbar is connected to a coil end while a separate busbar cover is coupled to a motor housing and a stator assembly, the number of work processes increases and the work complexity rises, resulting in longer processing time. However, in the hollow shaft motor 1 according to the present invention, since the busbar cover 23 is integrally formed with the motor housing 20 by resin molding while the stator assembly 10 is placed in an insert injection mold, the connection between the busbar and the coil is easy, and the assembly process is shortened, resulting in reduction of costs and improvement of productivity.

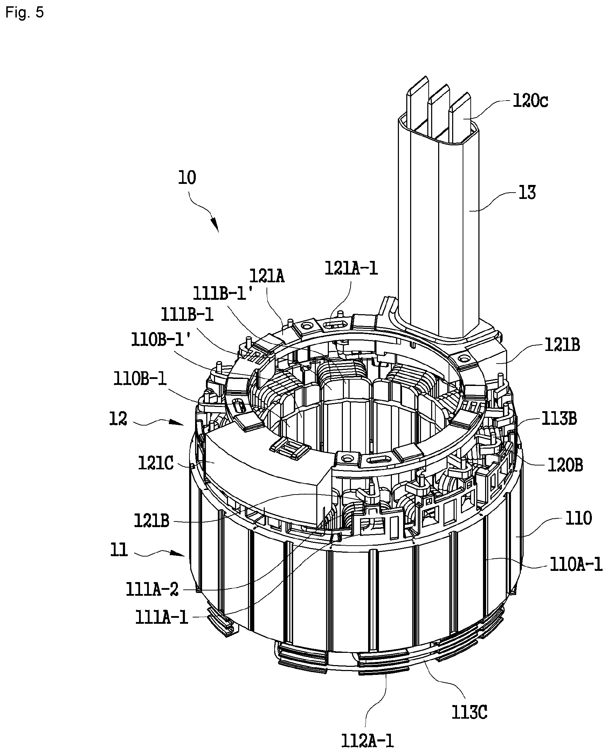

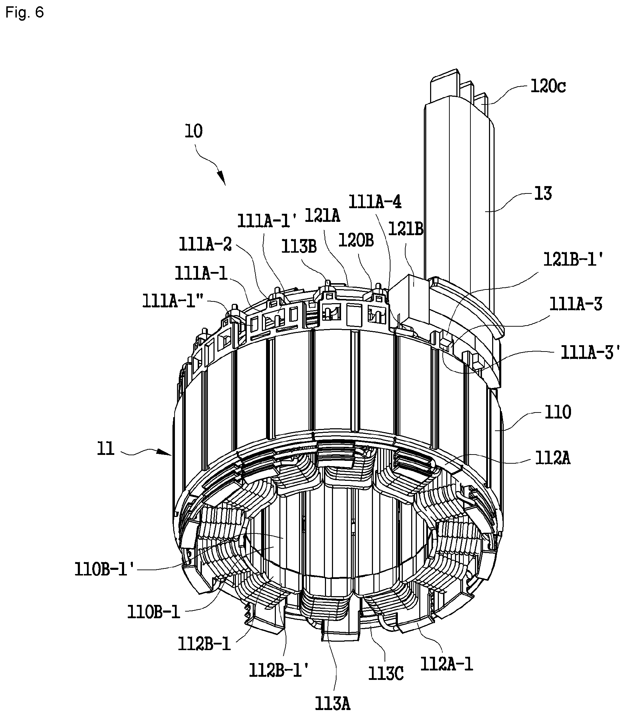

Fig. 5 is a top perspective view illustrating the stator assembly 10 of a hollow shaft motor 1 according to the present invention. Fig. 6 is a bottom perspective view illustrating the stator assembly 10. Referring to Figs. 5 and 6, the stator assembly 10 of the present invention comprises a stator 11, a busbar unit 12 and a terminal cover 13.

The stator 11 comprises a stator core 110, an upper insulator 111 coupled to an upper part of the stator core 110, a lower insulator 112 coupled to a lower part of the stator core 110, and a coil 113 wound around teeth 110B while the upper insulator 111 and the lower insulator 112 are coupled to the stator core 110.

An upper end part 111B-1 is formed at an axial end of the upper tooth insulating part 111B of the upper insulator 111, which protrudes upward from the tooth end part 110B-1 and is coupled thereto. An upper end part groove 111B-1' is formed vertically at the center of an axial end surface of the upper end part 111B-1, so as to communicate with the tooth end inner groove 110B-1'. Therefore, when forming the motor housing 20, a resin is also injected into the upper end part groove 111B-1', and the injected resin becomes a portion of the motor housing 20.

A lower end part 112B-1 is formed at an axial end of the lower tooth insulating part 112B, which protrudes downward from the tooth end part 110B-1 and is coupled thereto. A lower end part groove 112B-1' is formed vertically at the center of an axial end surface of the lower end part 112B-1, so as to communicate with the tooth end inner groove 110B-1'. Therefore, when forming the motor housing 20, a resin is also injected into the lower end part groove 112B-1', and the injected resin becomes a portion of the motor housing 20.

The coil 113 wound around the teeth forms a coil winding 113A, and resin molding is formed by insert injection in the empty space in the slot that is not occupied by the coil winding 113A. Therefore, after molding the motor housing 20, the axial surface of the tooth end part 110B-1 is exposed to the internal space of the motor housing 20, as illustrated in Fig. 4.

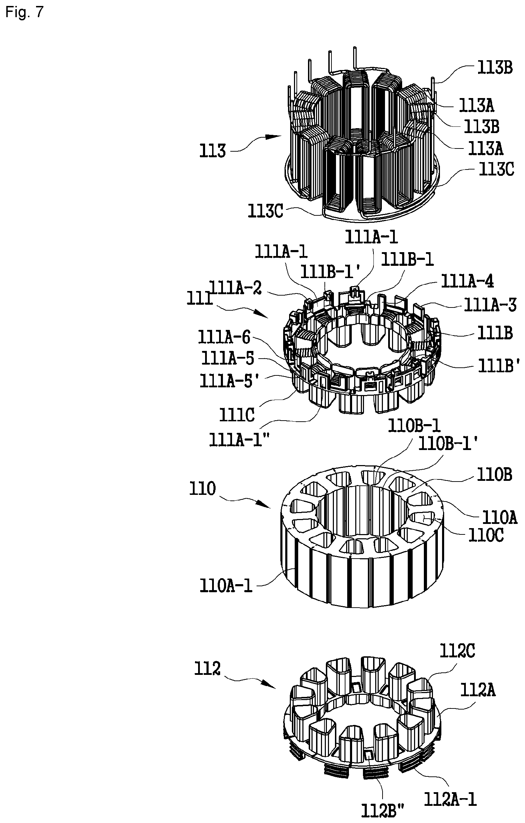

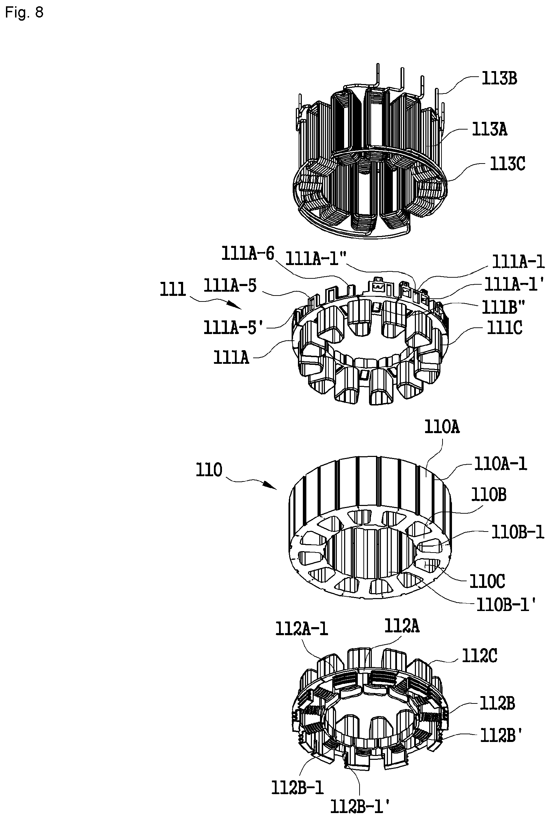

Fig. 7 is an exploded top perspective view illustrating the stator 11 of a hollow shaft motor 1 according to the present invention. Fig. 8 is an exploded bottom perspective view illustrating the stator 11. As illustrated in Figs. 7 and 8, the stator 11 of the present invention comprises a stator core 110, an upper insulator 111, a lower insulator 112 and a coil 113.

The stator core 110 comprises a core base 110A in the shape of a circle, a plurality of teeth 110B protruding inward from the core base 110A of the stator core 110 in a hollow shaft direction, and a slot 110C which is a space formed between two adjacent teeth 110B.

The upper insulator 111 is coupled to an upper part of the stator core 110, and comprises an upper base insulating part 111A in the shape of a ring coupled to an upper part of the core base 110A, an upper tooth insulating part 111B coupled to an upper part of the tooth 110B, and an upper slot insulating part 111C for insulating an upper inner surface of the slot 110C. An upper corrugated part 111B' is formed on an upper surface of the upper tooth insulating part 111B to allow the coil winding 113A to be wound smoothly. An upper tooth inner groove 111B" is formed on a lower surface of the upper tooth insulating part 111B to allow the resin molding to be injected thereinto.

The lower insulator 112 is coupled to a lower part of the stator core 110, and comprises a lower base insulating part 112A in the shape of a ring coupled to a lower part of the core base 110A, a lower tooth insulating part 112B coupled to a lower part of the tooth 110B, and a lower slot insulating part 112C for insulating a lower inner surface of the slot 110C. The lower slot insulating part 112C is assembled in contact with the upper slot insulating part 111C to insulate an inner surface of the slot 110C. A lower corrugated part 112B' is formed on a lower surface of the lower tooth insulating part 112B to allow the coil winding 113A to be wound smoothly. A lower tooth inner groove 112B" is formed on an upper surface of the lower tooth insulating part 112B to allow the resin molding to be injected thereinto.

The coil 113 is wound around each tooth 110B, and the coil wound around the tooth 110B comprises a coil winding 113A, a coil end part 113B, which is an end of the coil protruding upward, and a lower coil connection part 113C for connecting the coil windings 113A to each other. Each coil end part 113B is electrically connected to the busbar 120 which connects the coil windings 113A of the same phase. The lower coil connection part 113C connects the coil windings 113A of the same phase at a lower part of the stator 11, and is guided and fixed by a plurality of lower coil guides 112A-1 protruding downward from the lower base insulating part 112A of the lower insulator 112.

A plurality of coil support pieces 111A-1 protruding upward are formed in the upper base insulating part 111A of the upper insulator 111. The coil support piece 111A-1 has at least one coil coupling part 111A-2 on an upper part thereof. The coil end part 113B is coupled to the coil coupling part 111A-2 to serve to secure the coil end part 113B. The number of coil support pieces 111A-1 and coil coupling parts 111A-2 is not particularly limited and may vary depending on design factors such as the number of slots or the size of the stator.

A coil support piece hole part 111A-1' formed to be penetrated axially is provided on a lower part of the coil end part 113B of the coil support piece 111A-1. A resin mold passes through the coil support piece hole part 111A-1', ensuring that resin molding is properly formed around the coil end part 113B.

A coil support piece groove part 111A-1" is formed on an outer side of the coil support piece 111A-1, and the resin mold is filled in the coil support piece groove part 111A-1", ensuring that the coil support piece 111A-1 is firmly coupled to the motor housing 20.

At least one first block coupling protrusion 111A-3 protruding upward is formed on a portion of the upper base insulating part 111A. A first block insertion protrusion 111A-4 is formed on one side of the first block coupling protrusion 111A-3. In the drawings, two first block coupling protrusions 111A-3 and two first block insertion protrusions 111A-4 are illustrated, but the number of these protrusions is not necessarily limited to two and may vary according to design requirements.

At least one second block coupling protrusion 111A-5 is formed in the upper base insulating part 111A at a position facing the first block coupling protrusion 111A-3. A first block insertion protrusion 111A-6 is formed on one side of the second block coupling protrusion 111A-5. In the drawings, two second block coupling protrusions 111A-5 and two second block insertion protrusions 111A-6 are illustrated, but the number of these protrusions is not necessarily limited to two and may vary according to design requirements.

Since the first block coupling protrusion 111A-3 and the second block coupling protrusion 111A-5 are formed on the upper base insulating part 111A in the shape of a circle at positions facing each other, the coil support piece 111A-1 is arranged between the first block coupling protrusion 111A-3 and the second block coupling protrusion 111A-5. In other words, when viewed from above, if it is assumed that the first block coupling protrusion 111A-3 is positioned at the 12 o'clock direction and the second block coupling protrusion 111A-5 at the 6 o'clock direction, the coil support pieces 111A-1 are positioned approximately at the 2 to 4 o'clock and 8 to 10 o'clock directions. This arrangement facilitates the coil connection work between the coil end part 113B and the coil connection part 120B, while also ensuring that the positions of the coil end part 113B and the coil connection part 120B are neatly aligned on both sides.

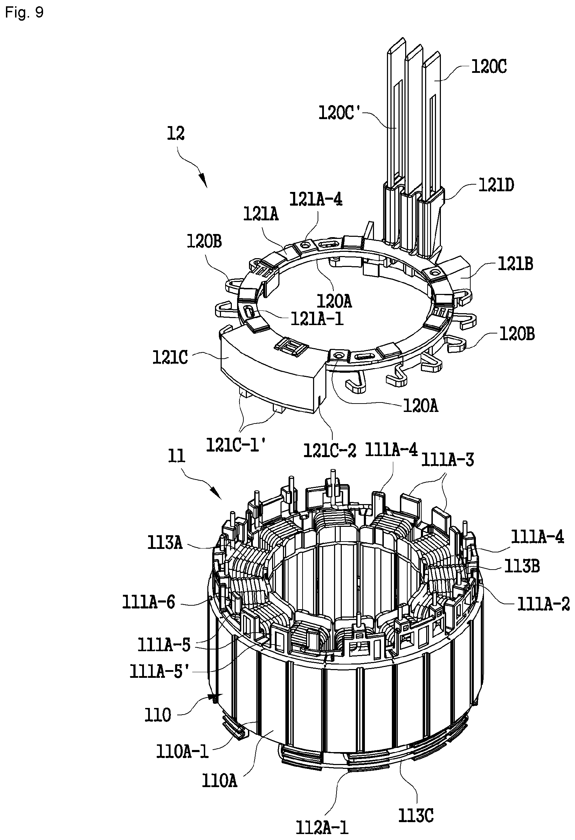

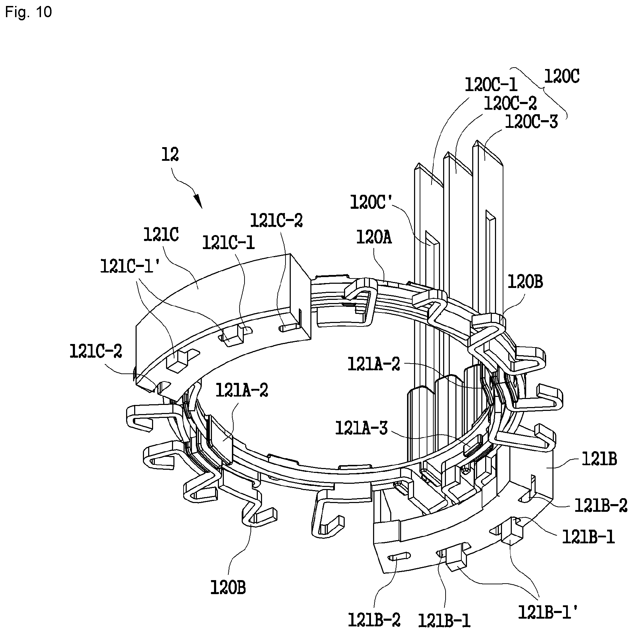

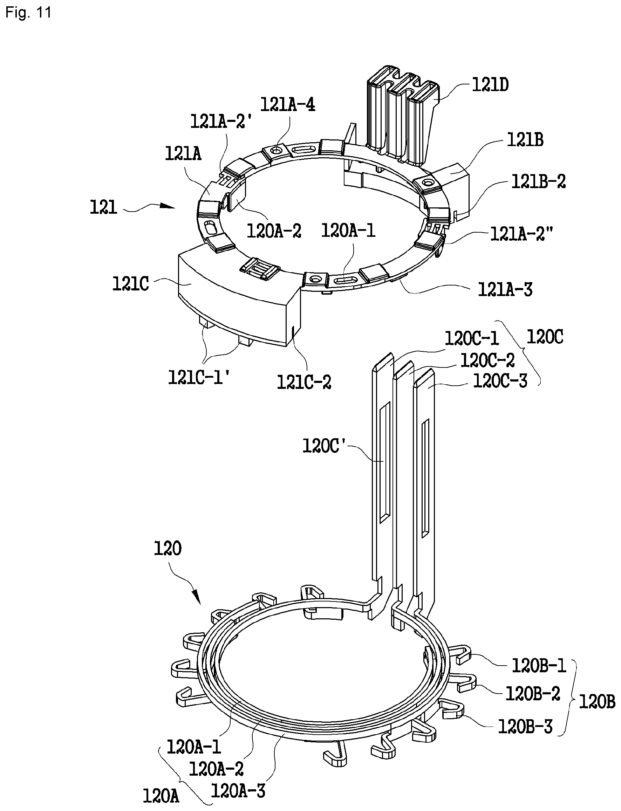

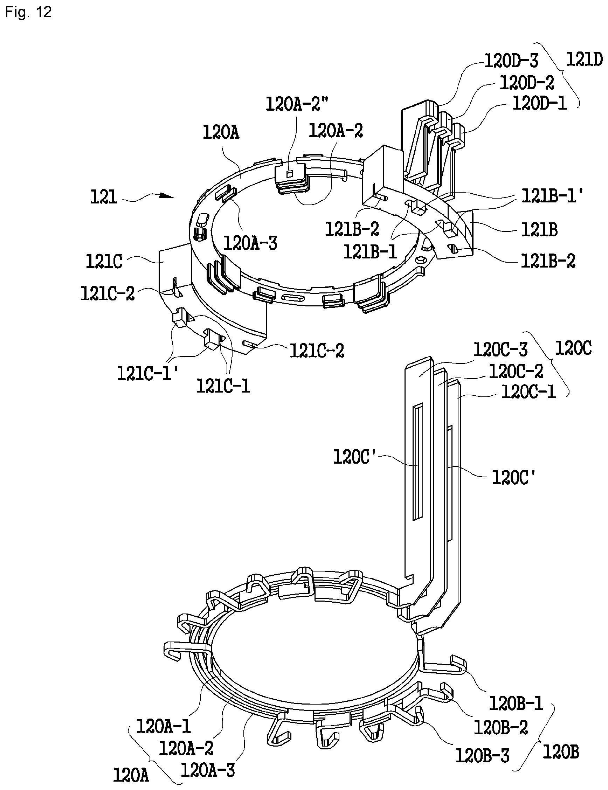

Fig. 9 is an exploded perspective view illustrating the stator 11 and the busbar unit 12 of the stator assembly 10 in a hollow shaft motor 1 according to the present invention. Fig. 10 is a bottom perspective view illustrating the busbar unit 12 of a hollow shaft motor 1 according to the present invention. Fig. 11 is an exploded top perspective view illustrating the busbar 120 and the pre-mold 121 of the busbar unit 12 in a hollow shaft motor 1 according to the present invention. Fig. 12 is an exploded bottom perspective view illustrating the busbar 120 and the pre-mold 121.

Referring to Figs. 9 to 12 together, the busbar unit 12 of the hollow shaft motor 1 according to the present invention comprises a busbar 120 and a pre-mold 121.

The busbar 120 is a conductor for electrically connecting the coil end parts 113B of the coil windings 113A of the same phase. The number of busbars 120 is not particularly limited, and a proper number of busbars 120 may be applied as needed. In the case of a three-phase BLDC motor, three busbars 120 are used to connect the U, V, and W phases respectively.

The pre-mold 121 serves to fix the busbar 120 to an upper part of the stator 11. To this end, the pre-mold 121 is coupled to the upper insulator 111 of the stator 11.

The busbar 120 comprises a busbar body 120A in the shape of a circle, a plurality of coil connection parts 120B protruding from one side of the busbar body 120A, and a terminal 120C protruding upward from one side of the busbar body 120A. Since three busbars 120 are applied in the drawings, each of the three busbar bodies 120A-1, 120A-2 and 120A-3 is shown with a plurality of coil connection parts 120B-1, 120B-2 and 120B-3, and terminals 120C-1, 120C-2, and 120C-3.

The coil connection part 120B is electrically connected to the coil end part 113B. The coil end part 113B may be connected to the coil connection part 120B by methods such as fusing or welding. To this end, the coil connection part 120B may be bent to the coil end part 113B. When viewed from above the busbar 120 in a plane, if it is assumed that the terminal 120C is positioned at the 12 o'clock direction, a plurality of coil connection parts 120B are positioned approximately at the 2 to 4 o'clock and 8 to 10 o'clock directions.

The pre-mold 121 is a structure made of a polymer resin compound that serves to guide the position of the busbar 120, secure the busbar 120 to an upper part of the stator 11, and guide the terminal 120C.

The pre-mold 121 comprises an annular ring part 121A, a first coupling block 121B formed on one side of the annular ring part 121A, a second coupling block 121C formed on another side of the annular ring part 121A, and a terminal guide 121D protruding upward from another side of the annular ring part 121A.

The annular ring part 121A is coupled to an upper part of the busbar body 120A in the shape of a circle of the busbar 120. The annular ring part 121A has a plurality of first exposure holes 121A-1. The busbar 120 is visible from above through the first exposure holes 121A-1, and a resin melt is injected through the first exposure holes 121A-1, so that the resin may be molded between the busbars 120.

A plurality of first busbar guides 121A-2 protrude downward from the annular ring part 121A, and are coupled between the plurality of busbars 120 to guide the positions of the busbars 120. A plurality of second busbar guides 121A-3 protrude downward from the annular ring part 121A, and are coupled between the plurality of busbars 120 to guide the positions of the busbars 120, separately from the first busbar guides 121A-2. The second busbar guides 121A-3 may be omitted according to design requirements.

A plurality of second exposure holes 121A-2' may be formed vertically through the annular ring part 121A. The second exposure holes 121A-2' are formed to communicate with the inspection holes 23C of the busbar cover 23 at corresponding positions, ensuring that the resin molding state between the busbars 120 is checked externally through the inspection holes 23C. The second exposure holes 121A-2' may be omitted if necessary.

A side guide groove 121A-2" is formed on an outermost outer surface of the first busbar guide 121A-2, thereby increasing a coupling force between an outer peripheral surface of the outermost busbar body 120A-3 and the first busbar guide 121A-2 by filling resin molding into the side guide groove 121A-2".

A plurality of internal viewing holes 121A-4 are formed vertically through the annular ring part 121A, ensuring that the coupling state of the busbar body 120A is visually inspected through the internal viewing holes 121A-4 before insert injection molding. The internal viewing holes 121A-4 may be used during quality testing of finished products and need not to be necessarily applied in actual mass-produced products.

The first coupling block 121B is formed on one side of the annular ring part 121A of the busbar body 120A and is positioned to correspond to the first block coupling protrusion 111A-3 of the upper insulator 111. The second coupling block 121C is formed on another side of the annular ring part 121A of the busbar body 120A and is positioned to correspond to the second block coupling protrusion 111A-5 of the upper insulator 111. Preferably, the first coupling block 121B and the second coupling block 121C are positioned to face each other, as illustrated in Figs. 10 to 12.

The first coupling block 121B and the second coupling block 121C serve to fix the busbar unit 12 to an upper part of the stator 11. To this end, at least one first coupling hole 121B-1 is formed in the first coupling block 121B. In Fig. 10, a pair of first coupling holes 121B-1 are formed to provide stable coupling. A first fixing protrusion 121B-1' protrudes downward from the first coupling hole 121B-1. The first block coupling protrusion 111A-3 of the upper insulator 111 is inserted into the first coupling hole 121B-1, while the first fixing protrusion 121B-1' is inserted into a first block coupling protrusion outer groove 111A-3', thereby providing stable coupling.

Similarly, at least one second coupling hole 121C-1 is formed in the second coupling block 121C. In Fig. 10, a pair of second coupling holes 121C-1 are formed to provide stable coupling. A second fixing protrusion 121C-1' protrudes downward from the second coupling hole 121C-1. The second block coupling protrusion 111A-5 of the upper insulator 111 is inserted into the second coupling hole 121C-1, while the second fixing protrusion 121C-1' is inserted into a second block coupling protrusion outer groove 111A-5', thereby providing stable coupling.

At least one first insertion hole 121B-2 is formed on one side of the first coupling hole 121B-1 in the first coupling block 121B. In Fig. 10, two first insertion holes 121B-2 are formed, one on each side of the first coupling holes 121B-1. The first block insertion protrusion 111A-4 of the upper insulator 111 is engaged with the first insertion hole 121B-2 to guide the coupling of the busbar unit 12.

At least one second insertion hole 121C-2 is formed on one side of the second coupling hole 121C-1 in the second coupling block 121C. In Fig. 10, two second insertion holes 121C-2 are formed, one on each side of the second coupling holes 121C-1. The second block insertion protrusion 111A-6 of the upper insulator 111 is engaged with the second insertion hole 121C-2 to guide the precise positioning.

The terminal guide 121D serves to guide and secure the position of the terminal 120C, thereby preventing the position of the terminal from being changed due to injection pressure during insert injection molding.

It should be noted that the description of the present invention described above is merely an example for understanding the present invention, and is not intended to limit the scope of the present invention. It should be construed that the scope of the present invention is defined by the appended claims, and all modifications and alternations of the present invention fall within the protection scope of the present invention.

## Claims

1. A hollow shaft motor, comprising:
a stator assembly 10; and
a motor housing 20 formed around the stator assembly 10 by resin molding,
wherein a hollow shaft rotor is placed inside the stator assembly 10, and the hollow shaft rotor is rotatably coupled to the motor housing.

2. The hollow shaft motor of claim 1, wherein the stator assembly 10 comprises a stator 11 and a busbar unit 12 coupled to an upper part of the stator.

3. The hollow shaft motor of claim 2, wherein the motor housing 20 comprises:
a housing body 21 having a structure with a hollow inner space so that the hollow shaft rotor is placed in the inner space; and
a flange 22 formed on an upper part of the housing body 21 extending outward.

4. The hollow shaft motor of claim 3, wherein a busbar cover 23 in which the busbar unit 12 is molded with a resin is formed on an inner side of the flange 22

5. The hollow shaft motor of claim 3, wherein a lower protrusion 24 having a ring shape and extending downward is formed on a lower part of the housing body 21.

6. The hollow shaft motor of claim 2, wherein the busbar unit 12 comprises a plurality of busbars 120 and a pre-mold 121 to which the busbars 120 are fixed.

7. The hollow shaft motor of claim 1, wherein a terminal cover 13 protruding upward is formed on one side of the motor housing 20.

8. A hollow shaft motor, comprising:
a stator assembly 10; and
a motor housing 20 formed around the stator assembly 10 by resin molding,
wherein a busbar cover 23 formed on an upper inner side of the motor housing 20 is integrally formed.
